# EUROPEAN PATENT APPLICATION

(11) **EP 1 622 112 A1**
(43) Date of publication of application: **01.02.2006**
(21) Application number: 04724178.1
(22) Date of filing: 29.03.2004
(51) Int. Cl.: G09G 3/20, G09F 9/40

(54) **DISPLAY SYSTEM**

(30) Priority: 31.03.2003 JP 2003096174
(71) Applicant: MATSUSHITA ELECTRIC INDUSTRIAL CO., LTD., Kadoma-shi, Osaka 571-8501 (JP)
(72) Inventor: KUWABARA, Takashi, (JP); IBARAKI, Susumu, (JP); MORI, Toshiaki, (JP); NAKANO, Nobuyuki, (JP); IWAMI, Ryotaro, (JP); TERADA, Tomohiro, (JP); IISAKA, Atsushi, (JP); KUROSAKI, Toshihiko, (JP)
(74) Representative: Pautex Schneider, Nicole Véronique
(86) International application number: PCT/JP2004/004417
(87) International publication number: WO 2004/088622

(57) **Abstract**

A display system (100) is provided which includes two display devices (101a and 101b); a coupling section (102) for coupling the two display devices such that one display device can be displaced relative to the other display device; a detection section (111-114) for detecting a value by which a position of the one display device relative to the otherdisplaydevice can be identified; and a display control section (115) for generating an image to be displayed on each of the one and the other display devices, based on the position detected by the detection section. The one and the other display devices display their respective images generated by the display control section.

## Description

### TECHNICAL FIELD

The present invention relates to a display system, and more particularly to a display system for displaying images on two display devices.

### BACKGROUND ART

Conventionally, as a display system such as the one described above, there exists a display system which comprises first and second display devices, a casing, an unloading/loading section, and an unfolding section.

The first and second display devices each have a display screen, and different images or the same image are (is) displayed on the display screens.

The casing houses the display devices such that the display screens face a front side and overlap each other in a horizontal direction.

The unloading/loading section allows the user to unload the first display device by moving the first display device in the horizontal direction of the casing while supporting the first display device with its display screen facing the front side. The unloading/loading section further allows the user to load the first display device into the casing by moving the first display device in the direction opposite to that in which the first display device is unloaded.

The unfolding section extends from the unloading/loading section to the direction of the front side, and allows the second display device to move in the horizontal direction while supporting the second display device with its display screen facing the front side, as in the case of the first display device, and at a point more forward than the first display device. The unfolding section allows the second display device to rotate about the supporting portion of the first display device in the unloading/loading section in a vertical direction relative to the horizontal direction, and further allows the second display device to be unfolded such that the display screen of the second display device faces the front side.

However, in the conventional display system, when an image is displayed, the positional relationship between the first and second display devices is fixed. Consequently, there is a problem in the conventional display system in that the form or type of image which can be provided to the user is limited.

Therefore, an object of the present invention is to provide a display system which delivers better usability to the user.

### DISCLOSURE OF THE INVENTION

To achieve the above objects, the present invention has the following aspects. A first aspect of the present invention is directed to a display system comprising: two display devices; a coupling section for coupling the two display devices such that one display device can be displaced relative to the other display device; a detection section for detecting a value by which a position of the one display device relative to the other display device can be identified; and a display control section for generating an image to be displayed on at least the one display device, based on the position detected by the detection section. Here, the one display device displays the image generated by the display control section.

The display control section generates, for example, a first image representing a map of a predetermined area and a second map image representing a map of an area surrounding the predetermined area. Here, the one display device may display the second map image generated by the display control section, and the other display device may display the first map image generated by the display control section.

The display system is installed in a vehicle, for example. In this case, the display control section generates, for example, an image at least for a passenger in the vehicle.

The coupling section is preferably provided to a backside of either the one or the other display device so as to couple the display devices such that either the other or the one display device can be fixed.

The coupling section preferably couples the display devices such that display sides of the one and the other display devices can be fixed facing in substantially a same direction.

In the case where the other display device has a groove of a predetermined shape formed in a backside thereof, the coupling section may include: a first supporting member engaged in the groove and sliding along the groove; a coupling member rotatably connected to the first supporting member; and a second supporting member rotatably connected to the coupling member and further supporting the one display device.

In the case where the one display device has an accommodating section formed at each of four corners thereof, the accommodating sections each may have at least one plane selected based on a size of the first supporting member.

The coupling section includes, for example, a guide section comprised in the one display device and having a groove formed therein which extends in substantially a same direction as a direction of one side of the one display device; and a slide section comprised in the other display device and sliding along the groove.

The coupling section may further include a rotation section comprised at a midpoint of the guide section, and the rotation section may allow a part of the guide section to rotate relative to end points of a rest part of the guide section.

The coupling section may include first and second supporting members comprised in the one and the other display devices, and the first and second supporting members may be coupled together, and allow either the one or the other display device to rotate in a first direction along a display side of either the other or the one display device.

The first and second supporting members may further allow either the one or the other display device to rotate in a second direction vertical to the first direction.

The coupling section may include first and second supporting members comprised in the one and the other display devices, and the first and second supporting members may be coupled together, and allow either the one or the other display device to rotate in a first direction vertical to a display side of either the other or the one display device.

As described above, according to the first aspect of the present invention, there are comprised a coupling section for displaceably coupling first and second display devices; and a display control section for generating images to be displayed on the one and the other display devices, based on the positional relationship between the two display devices detected by a position detection section. Accordingly, various images can be displayed on the first and second display devices according to the user's application. This makes it possible to provide a more user-friendly display system.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a perspective view illustrating the front side of a display system 100 according to a first embodiment of the present invention.
FIGS. 2A and 2B are a rear view and a side view of the display system 100, respectively, with both display devices 101 and 102 shown in FIG. 1 being used.
FIGS. 2C and 2D are a rear view and a side view of the display system 100, respectively, with only the display device 101 shown in FIG. 1 being used.
FIG. 3 is a schematic diagram illustrating specific examples of fixing members 104a-104c shown in FIGS. 2A-2D.
FIGS. 4A-4C are schematic diagrams illustrating an overview of the operations of the display system 100 shown in FIG. 1.
FIG. 5 is a functional block diagram of the display system 100 shown in FIG. 1.
FIG. 6 is a circuit diagram illustrating a specific structure of a position detection section 111 shown in FIG. 5.
FIG. 7 is a circuit diagram illustrating a specific structure of a first angle detection section 112 shown in FIG. 5.
FIG. 8 is a flowchart illustrating the operations of a display control section 115 shown in FIG. 5.
FIG. 9 is a schematic diagram illustrating the positional relationship between the display devices 101a and 101b shown in FIG. 1.
FIG. 10 is a schematic diagram illustrating another structure of the first angle detection section 112 shown in FIG. 5.
FIGS. 11A-11D are external views of a display system 200 according to a second embodiment of the present invention.
FIG. 12 is a functional block diagram of the display system 200 shown in FIGS. 11A-11D.
FIG. 13 is a flowchart illustrating the operations of a display control section 206 shown in FIG. 12.
FIG. 14 is a schematic diagram illustrating the positional relationship between display devices 201a and 201b shown in FIGS. 11A-11D.
FIGS. 15A-15C are external views of a display system 300 according to a third embodiment of the present invention.
FIG. 16 is a side cross-sectional view of the display system 300 shown in FIGS. 15A-15C.
FIG. 17 is a functional block diagram of the display system 300 shown in FIGS. 15A-15C.
FIG. 18 is a flowchart illustrating the operations of a display control section 306 shown in FIG. 17.
FIG. 19 is a diagram illustrating the positional relationship between display devices 301a and 301b shown in FIGS. 15A-15C.
FIG. 20 is a schematic diagram for illustrating another mechanism of a coupling section 302 shown in FIGS. 15A-15C.
FIGS. 21A-21E are external views of a display system 400 according to a fourth embodiment of the present invention.
FIG. 22 is a side cross-sectional view of the display system 400 shown in FIGS. 21A-21E.
FIG. 23 is an enlarged view illustrating the area around a coupling section 402 shown in FIGS. 21A-21E.
FIG. 24 is a functional block diagram of the display system 400 shown in FIGS. 21A-21E.
FIG. 25 is a flowchart illustrating the operations of a display control section 406 shown in FIG. 24.

### BEST MODE FOR CARRYING OUT THE INVENTION

### (First Embodiment)

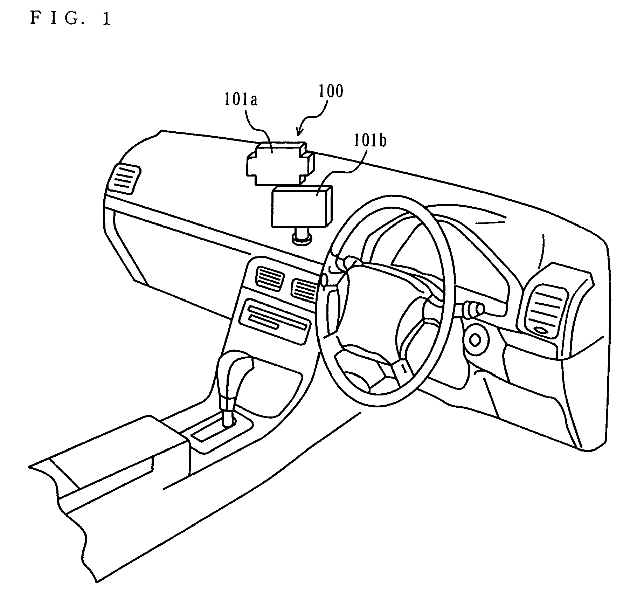

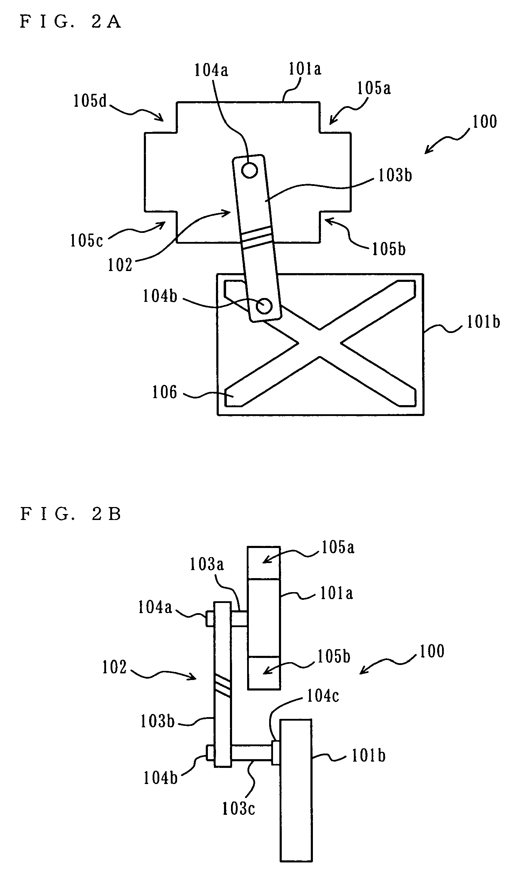

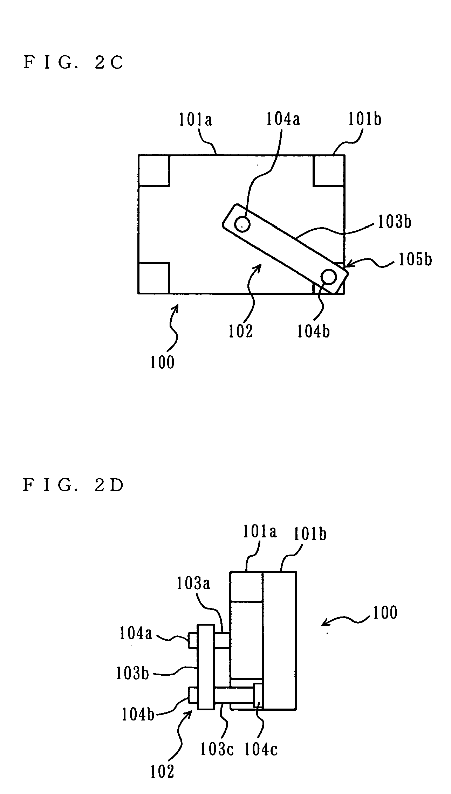

FIG. 1 is a perspective view illustrating the front side of a display system 100 according to a first embodiment of the present invention. FIGS. 2A and 2B are a rear view and a side view of the display system 100, respectively, with both display devices 101 and 102 shown in FIG. 1 being used. FIGS. 2C and 2D are a rear view and a side view of the display system, respectively, with only the display device 101 being used.

In FIGS. 1 and 2A-2D, the display system 100, which is installed in a vehicle, for example, comprises at least two display devices 101a and 101b and a coupling section 102.

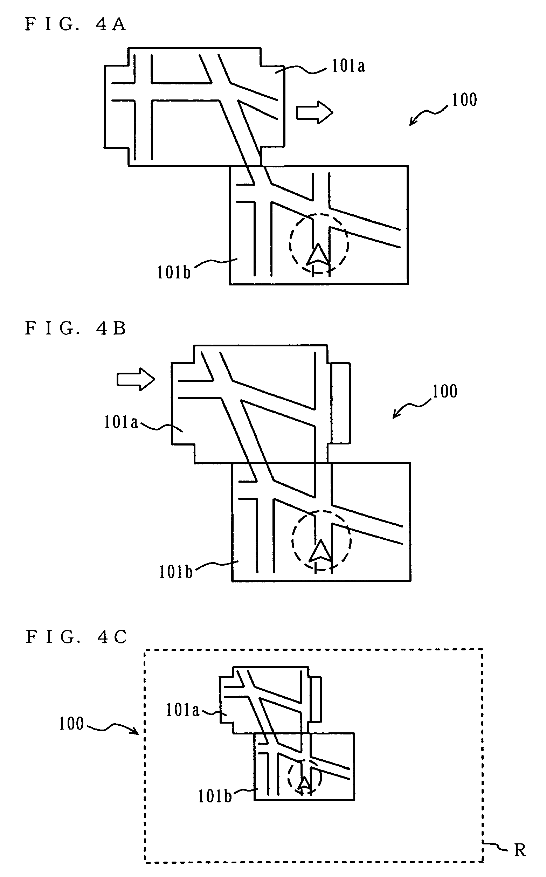

The display devices 101a and 101b are liquid crystal displays, for example, and display images under the control of a display image control section 110 (see FIG. 4), as will be described later.

Further, the display device 101a is coupled to the display device 101b by the coupling section 102 such that the display device 101a can move around the backside of the display device 101b. In connection with such a coupling section 102, accommodating sections 105a-105d are formed at the four corners of the display device 101a, respectively. In the present embodiment, each of the accommodating sections 105a-105d is composed of two planes vertical to each other, for example, and the size of each plane is determined on the basis of the diameter of a coupling member 103c, as will be described later. More specifically, in each plane, the length of a side parallel to the screen of the display device 101a is selected to be a value larger than the diameter of the coupling member 103c.

The display device 101b is mounted at any location in the vehicle. In connection with the coupling section 102, a guide section 106 is formed on the backside of the display device 101b. The guide section 106 is composed of grooves present in the backside of the display device 101b so as to substantially follow the diagonal lines of the display device 101b.

The coupling section 102 comprises, as shown in FIGS. 2A-2D, at least coupling members 103a-103c and fixing members 104a-104c, to couple the display device 101a to the display device 101b.

The coupling member 103a is a columnar member which protrudes substantially vertically relative to the backside of the display device 101a.

The coupling member 103b is a rod-like member extendable in its longitudinal direction, as with an extendable rod antenna which is commonly used in a device such as a radio receiver or a mobile phone, for example, and preferably maintains an extended or contracted state by a friction force. Further, the coupling member 103b is connected to the coupling member 103a so as to be rotatable about the coupling member 103a within a plane which is parallel to the backside of the display device 101b and vertical to the coupling member 103a. Note that, in the present embodiment, the coupling members 103a and 103b are connected to each other at one end of the coupling member 103b and an end surface of the coupling member 103a, for example.

The coupling member 103c is a columnar member which protrudes substantially vertically relative to the backside of the display device 101b, and slides along the grooves formed in the guide section 106, as will be described later. The coupling member 103b is further connected to the coupling member 103c so as to be rotatable about such a coupling member 103c within a plane which is parallel to the backside of the display device 101b and vertical to the coupling member 103c. Note that, in the present embodiment, the coupling members 103b and 103c are connected to each other at the other end of the coupling member 103b and an end surface of the coupling member 103c, for example.

By means of the above-described coupling members 103a-103c, the display device 101a rotates about the coupling members 103a and 103c within a plane vertical to each of the coupling members 103a and 103c. Consequently, while the display screens of both of the display devices 101a and 101b are maintained to be substantially parallel to each other, the display device 101a can be displaced around the backside of the display device 101b.

The fixing member 104a fixes the position of the coupling member 103b so that the coupling member 103b does not rotate relative to the coupling member 103a due to user's operation. Also, the fixing member 104a releases the fixation so that the coupling member 103b can rotate relative to the coupling member 103a by an inverse operation.

The fixing member 104b fixes the position of the coupling member 103b so that the couplingmember 103b does not rotate relative to the coupling member 103c due to user's operation. Also, the fixing member 104b releases the fixation so that the coupling member 103b can rotate relative to the coupling member 103c by an inverse operation.

The coupling member 103c moves on a plane parallel to the backside of the display device 101b and along the groove formed in the guide section 106, while being maintained to be vertical to the backside of the display device 101b. The fixing member 104c fixes the position of the coupling member 103c so that the coupling member 103c does not move relative to the display device 101b due to user's operation. Also, the fixing member 104c releases the fixation so that the coupling member 103c can move relative to the display device 101b by an inverse operation.

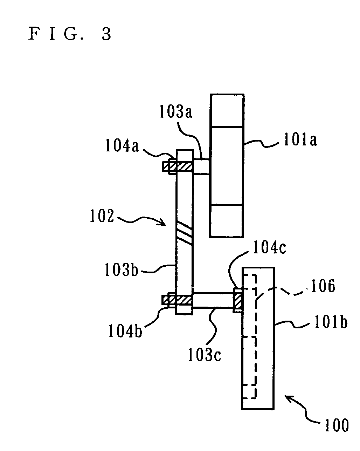

Here, FIG. 3 is a schematic diagram illustrating specific examples of the fixing members 104a-104c. A coupling member 103c has either an external or internal thread formed at a position on the side of a guide section 106. In a fixing member 104c, a through-hole is formed, and on a cylindrical area formed by the through-hole, either an internal or external thread is formed. By the user screwing such a fixing member 104c, the coupling member 103c is fixed to the display device 101b.

Further, in FIG. 3, the coupling member 103c has either an external or internal thread formed at its end. Such an end portion penetrates through a through-hole formed in a coupling member 103b. In a fixing member 104b, a through-hole is formed, and on a cylindrical area formed by the through-hole, either an internal or external thread is formed. By the user screwing the fixing member 104b with the end of the coupling member 103c penetrating through the through-hole of the coupling member 103b, the coupling member 103b is fixed to the coupling member 103c.

In FIG. 3, a coupling member 103a has either an external or internal thread formed at its end. Such an end portion penetrates through another through-hole formed in the coupling member 103b. In a fixing member 104a, a through-hole is formed, and on a cylindrical area formed around the through-hole, either an internal or external thread is formed. By the user screwing the fixing member 104a with the end of the coupling section 103a penetrating through the through-hole of the coupling member 103b, the coupling member 103a is fixed to the coupling member 103b.

By means of the above-described fixing members 104a-104c, the display device 101a can be fixed in the position determined by the user, with respect to the display device 101b. In addition, by means of the above-described fixing members 104a-104c and accommodating sections 105a-105d, when the display device 101a is moved behind the display device 101b, the coupling member 103c is accommodated in any of the accommodating sections 105a-105d.

In order that, when the user releases at least the fixing members 104a and 104b, the fixing members 104a and 104b do not fall out of the coupling members 103a and 103c, respectively, it is preferable that an end of each of the coupling members 103a and 103c be slightly thicker than the thread portion.

Next, referring to FIGS. 4A-4C, an overview of the operations of the display system 100 configured in the above-described manner will be described. First, the user releases the fixation provided by the fixing members 104a-104c, and then moves the display device 101a in a desired direction (see arrows in FIGS. 4A and 4B). During this event, the coupling member 103c slides along the guide section 106, or the coupling member 103b extends. Thereafter, the user allows the display device 101a to be fixed in any desired position, and screws the fixing members 104a-104c. By this, the display device 101a is fixed at a position determined by the user. After the position of the display device 101a has been determined, the display system 100 detects the position of the display device 101a relative to the display device 101b, generates an image, and then displays the image on the display devices 101a and 101b.

For example, in the case where the display system 100 displays a map image used to guide the vehicle, when the display device 101a is positioned at the upper left of the display device 101b, the display system 100, first, detects the position of the display device 101a. Thereafter, within an area R (see the area enclosed by the dotted-line in FIG. 4C) with the location displayed on the display device 101b as the center, an area to be displayed on the display device 101a is identified. The display system 100 generates a map image to be displayed on the display device 101b, and further generates a map image of the identified area. These generated images are displayed on the display devices 101a and 101b. By this, the user can view on the display device 101a a map of an area adjacent to the map displayed on the display device 101b.

As shown in FIG. 4B, in the case also where the display device 101a is shifted slightly in a rightward direction from the position shown in FIG. 4A, the display system 100 detects the current position of the display device 101a and generates an appropriate map image.

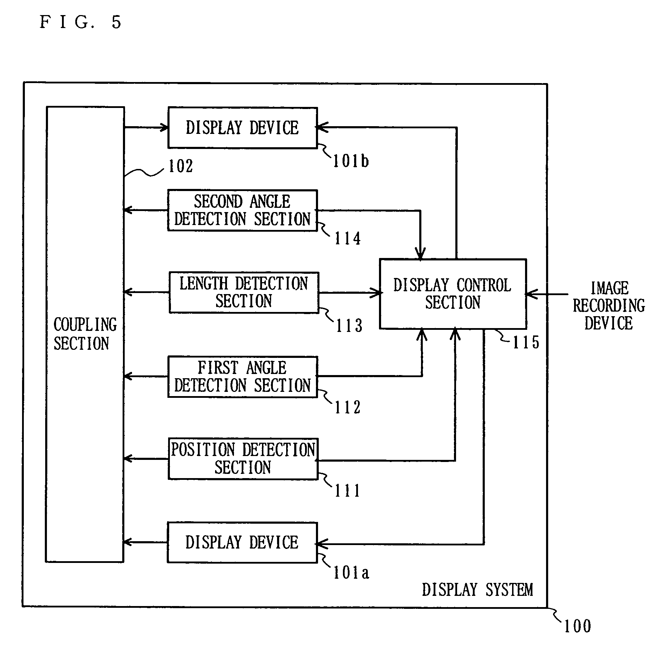

Here, FIG. 5 is a block diagram illustrating the functional structure of the display system 100. In FIG. 5, the display system 100 comprises a position detection section 111, a first angle detection section 112, a length detection section 113, a second angle detection section 114, and a display control section 115, in addition to display devices 101a and 101b and a coupling section 102 which are already described.

The position detection section 111 is arranged in the vicinity of a connection portion between the coupling member 103c and the guide section 106, and detects the position of the coupling member 103c in the groove formed in the guide section 106.

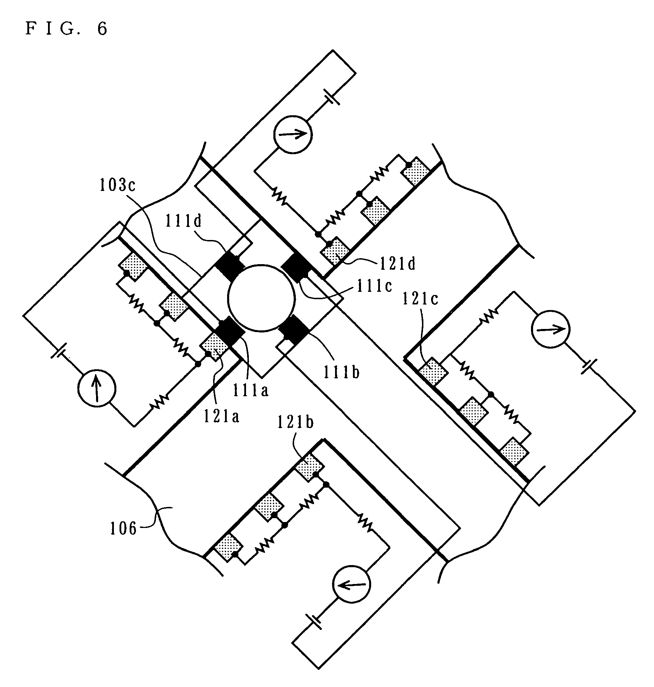

Here, FIG. 6 is a circuit diagram illustrating a specific structure of the position detection section 111. In FIG. 6, the position detection section 111 is composed of a variable resistance circuit whose resistance value changes depending on the position of the coupling member 103c, and includes first conductors 111a-111d and second conductors 121a-121d.

The conductors 111a-111d each are formed from a metal, for example, and arranged at a portion of the coupling member 103c which comes into contact with the guide section 106. The conductors 111a-111d are arranged at different locations from each other.

The conductors 121a-121d each are formed from a metal, for example, and arranged at a portion of the guide section 106 which comes into contact with the coupling member 103c. The conductors 121a-121d are arranged at locations which are different from each other and which can come into contact with the conductors 111a-111d.

The position detection section 111 outputs a current value which varies depending on the combination of conductors, the combination consisting of one of the conductors 111a-111d currently being in contact and one of the conductors 121a-121d. Based on such a current value, the display control section 115 identifies the current position of the coupling member 103c.

Referring back to FIG. 5, the angle detection section 112 is arranged in the vicinity of a connection portion between the coupling members 103b and 103c, and detects the rotation angle of the coupling member 103b relative to the coupling member 103c.

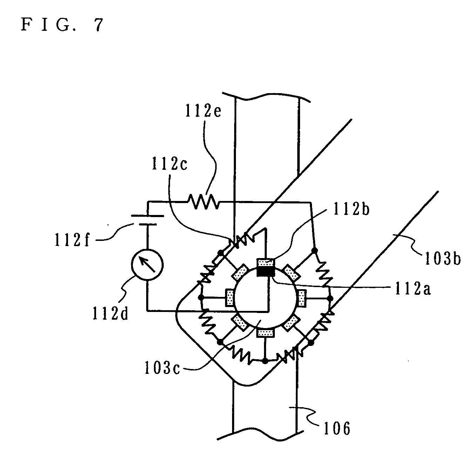

Here, FIG. 7 is a circuit diagram illustrating a specific structure of the angle detection section 112. In FIG. 7, the angle detection section 112 includes a first conductor 112a, eight second conductors 112b, seven resistors 112c, an ammeter 112d, a resistor 112e, and a direct-current power supply 112f. Note that the number of the conductors 112b and the number of the resistors 112c are not limited to those shown in the drawing; however, the greater the number of the conductors 112b, the more precisely the angle detection section 112 can detect the rotation angle of the coupling member 103b.

The conductors 112a and 112b are formed from a metal, for example, and arranged at locations on the coupling members 103c and 103b where the conductors 112a and 112b can electrically contact with each other. Preferably, the conductors 112b are arranged substantially circularly on the coupling member 103c.

A resistor 112c is connected between two adjacent conductors 112b. Note, however, that no resistor 112c is connected between a certain pair of the conductors 112b. The direct-current power supply 112f is connected, through the resistor 112e, to one of the conductors 112b between which no resistor 112c is connected. The ammeter 112d is connected to the direct-current power supply 112f.

When the coupling member 103b rotates about the coupling member 103c, the conductor 112b being in contact with the conductor 112a changes to another, and the number of resistors 112c being electrically connected changes. Accordingly, the resistance value connected to the direct-current power supply 112f changes, and therefore the current value detected by the ammeter 112d changes. The display control section 115 detects the rotation angle of the coupling member 103b from the value detected by the ammeter 112d.

The length detection section 113 is arranged inside the coupling member 103b and detects the amount of extension of the coupling member 103c. The length detection section 113 is composed such that, for example, the circuit shown in FIG. 7 is changed to a circuit for detecting a value which varies depending on the amount of extension.

The second angle detection section 114 is arranged in the vicinity of a connection portion between the coupling members 103b and 103a, and detects the rotation angle of the coupling member 103a relative to the coupling member 103b. The second angle detection section 114 is composed of a circuit similar to the one shown in FIG. 7.

The display control section 115 generates a map image, for example, using necessary data from an external image recording device, and outputs the map image to the display devices 101a and 101b. The display control section 115 calculates an area, within the area R, to be occupied by the screen of the display device 101a from the output values of the position detection section 111, the angle detection section 112, the length detection section 113, and the angle detection section 114, and generates a map image of the calculated area. The display control section 115 further generates a map image to be displayed on the display device 101b and outputs the map image to the display device 101b.

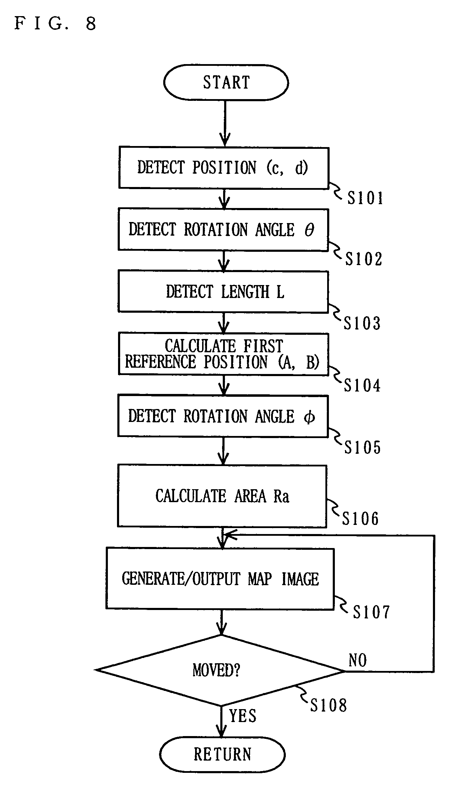

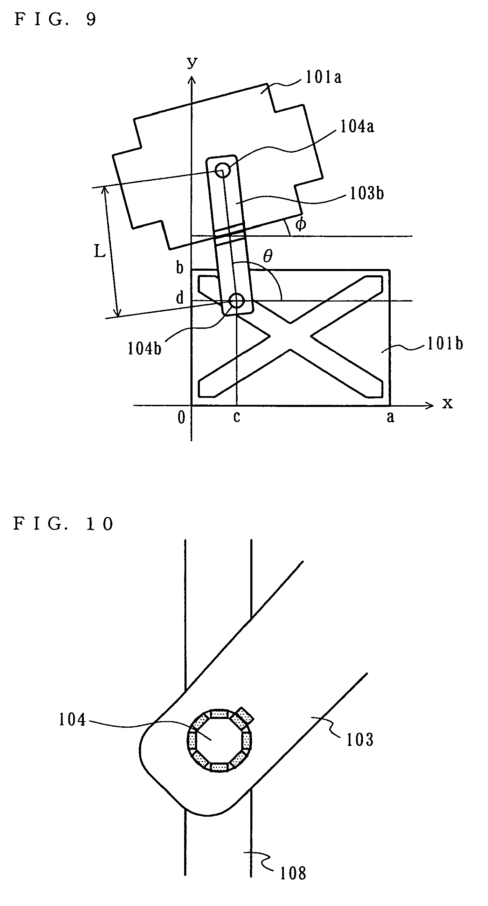

Here, FIG. 8 is a flowchart illustrating the operations of the display control section 115. FIG. 9 is a schematic diagram illustrating the positional relationship between the display devices 101a and 101b. Referring to FIGS. 8 and 9, the operations of the display control section 115 will be described below. In the following description, as shown in FIG. 9, the reference point of the area R is present at the lower left corner of the display device 101b. The length of each of the display devices 101a and 101b in a horizontal direction is represented by a and the length of each of the display devices 101a and 101b in a vertical direction is represented by b.

First, the display control section 115 detects where the coupling member 103c is positioned, based on the current value detected by the position detection section 111 (step S101). Specifically, the display control section 115 has a table in which pieces of information about the position of the reference point of the coupling member 103c are associated with current values. The display control section 115 detects where the coupling member 103c is positioned by referring to such a table. Note that in the following description the current position of the coupling member 103c is represented by (c, d).

Next, the display control section 115 detects the rotation angle of the coupling member 103b based on the current value detected by the angle detection section 112 (step S102). The detection of the rotation angle also uses a table in which rotation angles are associated with current values. Note that in the following description the rotation angle of the coupling member 103b is represented by θ.

Next, the display control section 115 detects the length of the coupling member 103b based on the current value detected by the length detection section 113 (step S103). The detection of the length also uses a table in which lengths are associated with current values. Note that in the following description the length of the coupling member 103b is represented by L.

Next, the display control section 115 calculates a connection position between the coupling members 103a and 103b (hereinafter referred to as the first reference position (A, B)) using the following equation (1) (step S104):$( A , B ) = ( c + Lcos θ , d + Lsin θ )$

Next, the display control section 115 detects the rotation angle φ of the coupling member 103a based on the current value detected by the angle detection section 114 (step S105). The detection of the rotation angle Ø is performed in the same manner as that for the rotation angle θ.

Next, the display control section 115 derives an area Ra, within the area R, to be occupied by the display device 101a using the following equations (2) (step S106). At this stage, assuming that the display device 101a is rectangular shaped, the display control section 115 determines the coordinate values P1-P4 of the four corners of the display device 101a relative to the reference point. $\begin{matrix}P 1 = ( A - ( a / 2 ) cos Φ - ( b / 2 ) sin Φ , B - ( a / 2 ) sin Φ + ( b / 2 ) cos Φ ) \\ P 2 = ( A + ( a / 2 ) cos Φ - ( b / 2 ) sin Φ , B + ( a / 2 ) sin Φ + ( b / 2 ) cos Φ ) \\ P 3 = ( A - ( a / 2 ) cos Φ + ( b / 2 ) sin Φ , B - ( a / 2 ) sin Φ - ( b / 2 ) cos Φ ) \\ P 4 = ( A + ( a / 2 ) cos Φ + ( b / 2 ) sin Φ , B + ( a / 2 ) sin Φ - ( b / 2 ) cos Φ )\end{matrix}$

Next, the display control section 115 generates a map image to be displayed in the area Ra calculated in step S105, and outputs the map image to the display device 101a. In addition, the display control section 115 generates a map image to be displayed on the display device 101b, and outputs the map image to the display device 101b (step S107). The display devices 101a and 101b display the map images received from the display control section 115. Note that since the display device 101a has the accommodating sections 105a-105d formed at the four corners thereof, the four corners of the displayed map image are cut off.

Next, the display control section 115 determines whether the display device 101a has moved based on the output values of the position detection section 111, the angle detection section 112, the length detection section 113, and the angle detection section 114 (step S108). Specifically, if any one of the output values has changed, the display control section 115 determines that the display device 101a has moved.

If determined to be "YES" in step S108, the display control section 115 returns to the operation of step S101. On the other hand, if determined to be "NO", since the area Ra has not changed, the display control section 115 returns to the operation of step S107, and allows the display device 101a to display a map image according to the same area Ra.

As described above, according to the first embodiment, since the user can freely change the position of the display device 101a relative to the display device 101b, and the display control section 115 generates a map image according to the current position of the display device 101a, it is possible to provide a user-friendly display system. For example, in the case where the user wants to see a map image of a location a bit away from the current location, the user adjusts the position of the display device 101a in the direction in which he/she wants to see, instead of changing the scale. Thereafter, the display control section 115 automatically detects the position of the display device 101a, and allows the display device 101a to display a map image appropriate to that position.

Further, when the user does not need to use the display device 101b, the display device 101a can be accommodated behind the display device 101b, and thus user usability is improved.

Note that the structure of the angle detection section 112 is not limited to the one shown in FIG. 7, and it is also possible to employ a structure as shown in FIG. 10. Specifically, as shown in FIG. 9, a plurality of conductors (see the hatched portions) may be formed on the side of the coupling member 103c. Alternatively, for example, an existing variable resistor which is commonly used in a volume selector of an audio device may be used for the angle detection section 112. This makes it possible to detect a current value which changes in accordance with the change in rotation angle θ.

The position detection section 111 or the length detection section 113 may be composed of an existing slide-type variable resistor (e. g. , a variable resistor used in a mixer for controlling tone, etc.). This enables the position detection section 111 or the length detection section 113 to output a current value which changes in accordance with the change in position (c, d) or length L.

Further, the detection sections 111-114 are not limited to the aforementioned variable resistance circuits. The detection sections 111-114 maybe alternatively such that a first angle sensor which uses the gravitational direction as the reference is mounted to the display device 101b and a second angle sensor which uses the gravitational direction as the reference is mounted also to the display device 101a, and by calculating the difference between the angles measured by the first and second angle sensors, the tilt of the display device 101a relative to the display device 101b is determined.

The coupling member 103b is not necessarily extendable.

The display system 100 may further comprise a mechanism for allowing the display device 101a to rotate such that the tilt angle φ of the display device 101a is 0. In this case, the display system 100 may further comprise a horizontal sensor mounted to the display device 101a and allow the display device 101a to rotate such that the tilt angle φ of the display device 101a is 0, based on the angle measured by the horizontal sensor.

The display devices 101a and 101b are not limited to displaying a map image; for example, the display device 101b and 101a may be allowed to display a map image and the display device 101a and 101b may be allowed to display a screen of an image other than the map image (e.g., a GUI (Graphical User Interface) image of a navigation device or a television image). Alternatively, both of the display devices 101a and 101b may be allowed to display television images.

The structure of the coupling section 102 is not limited to the one described above; other structures may be employed as long as the positional relationship between the display devices 101a and 101b can be changed in any desired manner.

Moreover, the fixing members 104a-104c are not limited to those described above; the fixing members 104a-104c may be implemented such that a friction force is constantly applied in a rotation direction to a portion where the coupling member 103b contacts with either of the coupling members 103a and 103c. It is preferable that the magnitude of the friction force be selected to be sufficient for the user to change the position of the display device 101a and sufficient for the display device 101a to be fixed. In this case, when fixing the position of the display device 101a, the user does not need to adjust the fixing sections 104a and 104b. Similarly, a friction of a magnitude which does not cause the coupling member 103c to move because of the weight of the structure of the display system 100 may act between the guide section 106 and the coupling member 103c. In this case, it becomes unnecessary for the user to adjust the fixing member 104c.

If it is not necessary to completely hide the display device 101a behind the display device 101b, the display device 101a does not need to comprise the accommodating sections 105a-105b and/or the guide section 106.

The display system 100 may further comprise a mechanism for allowing the display device 101a to automatically move based on a control signal for specifying the position of the display device 101a. In this case, the structure may be such that the display device 101a automatically moves in conjunction with the movement of the vehicle. For example, a map of the area surrounding the current location is displayed on the display device 101b, and a map of the area surrounding the destination is displayed on the display device 101a. If the user is located in the area surrounding the destination, the display system 100 allows the display device 101a to automatically move behind the display device 101b such that the map of the area surrounding the current location and the map of the area surrounding the destination are interconnected. Note that, after both display devices 101a and 101b have started to overlap with each other, the display system 100 controls the coupling member 103c to move, through the center of the groove formed in the guide section 106, in a direction where there is a corner, among four corners, to which the display device 101a is moving. By such a movement control, the display system 100 can more intuitively convey to the user the direction and distance of the destination. When the user has arrived at the destination, the display system 100 is such that the display device 101a is being accommodated (see FIGS. 2C and 2D). Thus, the user can be saved from the trouble of accommodating the display device 101a.

The display system 100 may be directed to other applications than a vehicle-mounted navigation system. For example, the display system 100 may be directed to a CAD (Computer Aided Design) . In this case too, by displaying a design drawing associated with the position of the display device 101b, the display system 100 can display the design drawing without adjusting the scale or scrolling, thereby providing an advantage in improving user's working efficiency. Alternatively, the display system 100 may display a nautical or aeronautical chart, for example.

### (Second Embodiment)

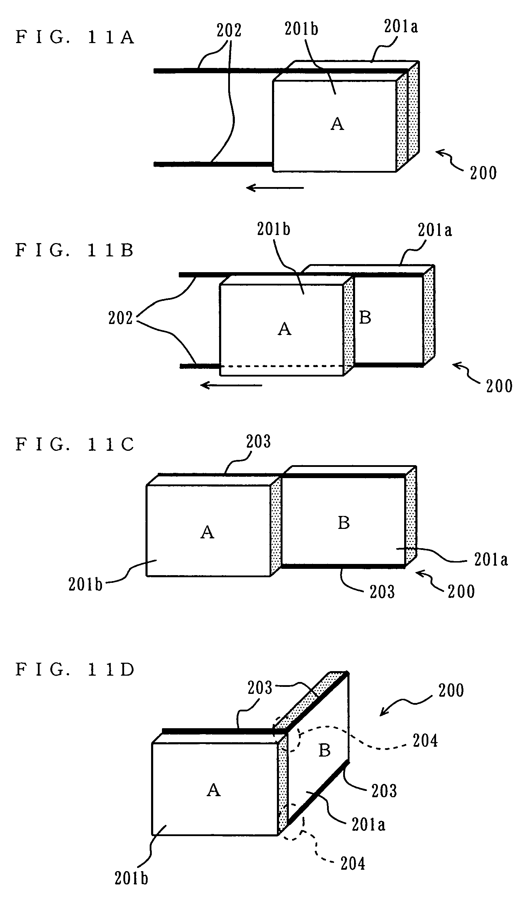

FIGS. 11A-11D are external views of a display system 200 according to a second embodiment of the present invention. FIGS. 11A-11D also illustrate the state transition of the display system 200.

The display device 200, which is installed in a vehicle, for example, comprises display devices 201a and 201b and a coupling section 202. Note that, to assist in understanding, in FIGS. 11A-11D a display screen of the display device 201a has the alphabet "A" attached thereto and a display screen of the display device 201b has the alphabet "B" attached thereto.

The display devices 201a and 201b are liquid crystal displays, for example. These display devices 201a and 201b display images such as those described in the first embodiment.

In order to couple the display devices 201a and 201b, the coupling section 202 includes track sections each mounted to each side of the display device 201a parallel to the horizontal direction of the display device 201a. The display device 201b moves along such track sections and in the horizontal direction of the display device 201a. The length of the track sections is selected to be in the order of twice the length of the sides of the display device 201a parallel to the horizontal direction of the display device 201a. By doing so, the movable range of the display device 201b is substantially from a position where the entire display device 201a is covered by the display device 201b to a position where the entire display device 201a appears. Preferably, a friction force of a magnitude which does not cause a position shift of the display device 202b is acting at a contact portion between the coupling section 202 and the display device 202b. Each track section has a hinge section 204 arranged at substantially the center thereof. By means of the hinge sections 204, substantially the left half of the track sections rotate relative to end points of the right half and within a plane parallel to the horizontal direction of the display device 201a. Therefore, as shown in FIG. 11D, the display device 201b is displaced relative to the display section 201a.

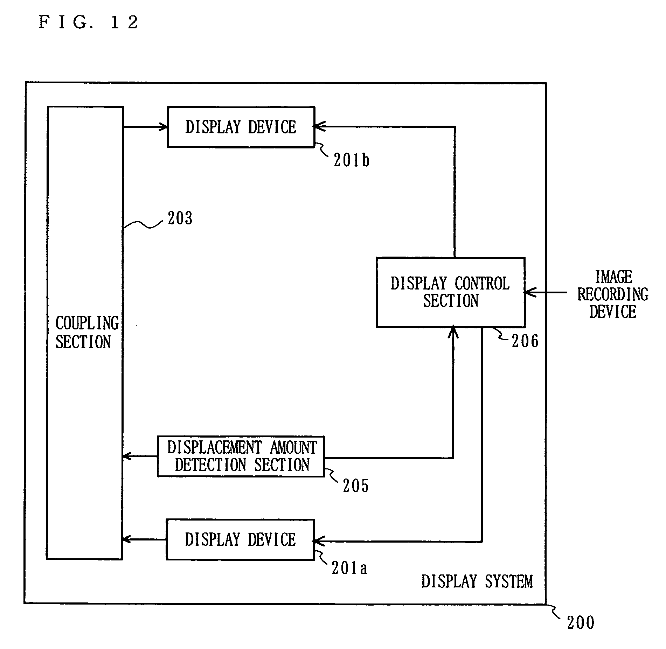

Here, FIG. 12 is a block diagram illustrating a functional structureofthedisplaysystem200. In FIG. 12, the display system 200 comprises a displacement amount detection section 205 and a display control section 206, in addition to display devices 201a and 201b and a coupling section 202 which are already described.

The displacement amount detection section 205 is implemented by a circuit similar to the position detection section 111 shown in FIG. 6, and arranged in at least one of the track sections. Such a displacement amount detection section 205 outputs a value indicating the amount of displacement of the display device 201b.

The display control section 206 generates a map image, for example, using necessary data acquired from an external image recording device, and outputs the image to the display devices 201a and 201b. The display control section 206 calculates an area, within an area R which is defined in the same manner as above, to be occupied by the screen of the display device 201b from the output value of the displacement amount detection section 205, and generates a map image of the calculated area. The display control section 206 further generates a map image to be displayed on the display device 201a and outputs the image to the display device 101b.

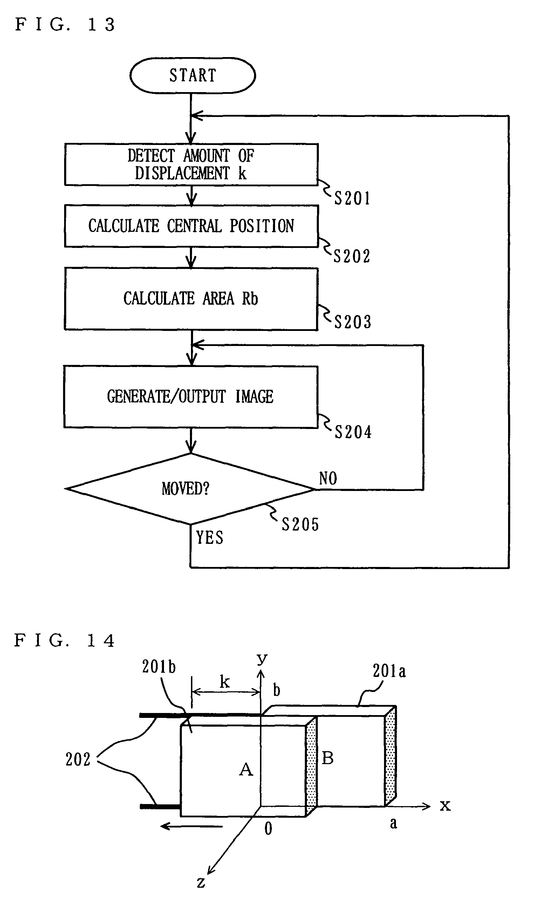

FIG. 13 is a flowchart illustrating the operations of the display control section 206. FIG. 14 is a diagram illustrating the positional relationship between the display devices 201a and 201b. Referring to FIGS. 13 and 14, the operations of the display image control section 206 will be described below.

First, the display control section 206 detects the amount of displacement k of the display device 201b relative to the display device 201a, based on the output value of the displacement amount detection section 205 (step S201). The detection of the amount of displacement k is performed by referring to a table which is prepared in advance and represents the relationship between the output value of the displacement amount detection section 205 and the amount of displacement k.

Next, the display control section 206 calculates, using the following equation (3), the central position (a/2-k, b/2) of the display device 201b with a predetermined position of the display device 201a (for example, the lower left corner of the display device 201a in the present embodiment) being the origin point (step S202).

Next, the display control section 206 calculates, using the following equation (4), coordinate values (-k, b), (a-k, b), (-k, 0), and (a-k, 0) indicating the four corners of an area Rb of the screen of the display device 201b, which does not overlap with the screen of the display device 201a (step S203).

Next, the display control section 206 generates an image for the display image 201a and an image for the display device 201b based on the area Rb just calculated, and outputs the images to the respective display devices (step S204). By this, the display devices 201a and 201b display the images, as with the first embodiment. Note that the types of images are as described above.

Next, the display control section 206 determines whether the display device 201b has moved based on the change in the output value of the displacement amount detection section 205 (step S205). If determined to be "YES", the display control section 206 returns to step S201 again. On the other hand, if determined to be "NO", the display control section 206 performs step S204 again.

As is clear from the above description, the display system 200 according to the second embodiment is also a user-friendly system, as with the aforementioned display system 100.

Note that although the aforementioned embodiment illustrates the display system 200 in which the display device 201b is movable in a horizontal direction, the structure is not limited thereto; the display device 201b may be movable in a vertical direction. Alternatively, the display device 201b may be movable in both directions.

As shown in FIG. 11D, by means of the hinges 204, the display device 201b can be arranged not only in the horizontal direction but also at other positions than the position parallel to the display device 201a. Accordingly, the display system 200 can allow one of the display devices 201a and 202b to display an image for the driver of the vehicle and allow the other display device to display an image for the passenger.

In the case where the display system 200 comprises two liquid crystal panels as two display devices 201a and 201b, an image with a large depth of field may be provided in the state shown in FIG. 11A.
In this case, a backlight unit needs to be comprised behind both display devices 201a and 201b.

### (Third Embodiment)

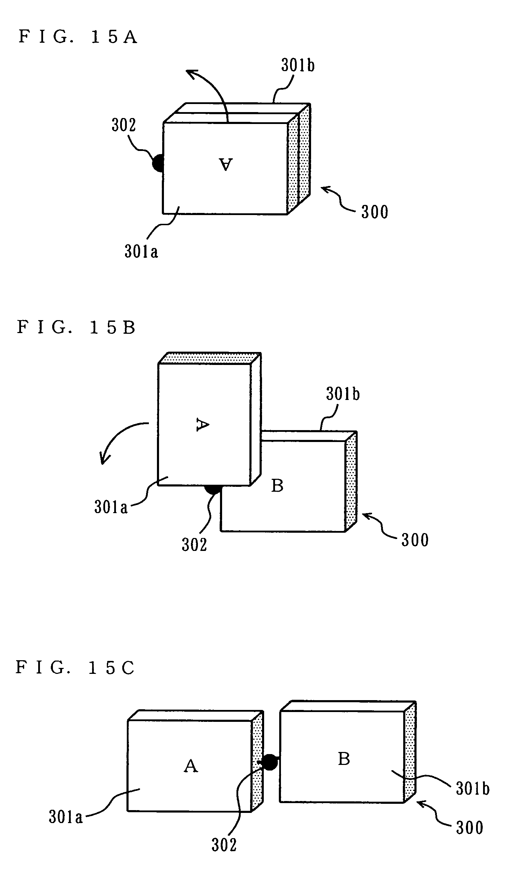

FIGS. 15A-15C are external views of a display system 300 according to a third embodiment of the present invention. FIGS. 15A-15C also illustrate the state transition of the display system 300.

The display device 300, which is installed in a vehicle, for example, comprises display devices 301a and 301b and a coupling section 302. Note that, to assist in understanding, in FIGS. 15A-15C a display screen of the display device 301a has the alphabet "A" attached thereto and a display screen of the display device 301b has the alphabet "B" attached thereto.

The display devices 301a and 301b are liquid crystal displays, for example. These display devices 301a and 301b display images such as those described in the first embodiment.

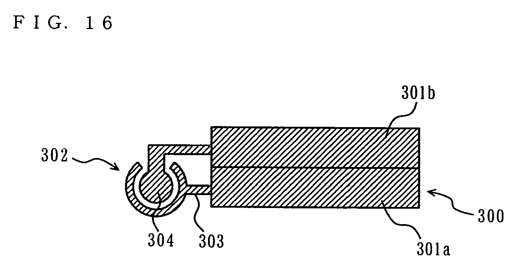

As shown in a side cross-sectional view of FIG. 16, the coupling section 302 includes coupling members 303 and 304 so as to couple side surfaces of the display devices 301a and 301b.

The coupling member 303 is mounted to one side surface of the display device 301a. A spherical body having a substantially spherical space provided inside thereof is mounted at an end of the coupling member 303. The spherical body of the coupling member 303 has a through-hole formed therein so that the display device 301a can be displaced relative to the display device 301b.

The coupling member 304 is mounted to one side surface of the display device 301b. A spherical body which is accommodated in the space provided inside the coupling member 303 is mounted at an end of the coupling member 304. Here, it is preferable that a friction force of a magnitude capable of supporting the weight of the display device 301a act at a contact portion between the coupling members 304 and 303.

By such a coupling section 302, the user can accommodate the display device 301b behind the display device 301a, as shown in FIG. 15A. In the case where the user wants to use both display devices 301a and 301b, as shown in FIG. 15B, the display device 301a is allowed to rotate about the coupling section 302 within a plane parallel to the display screen of the display device 301b. As shown in FIG. 15C, the user may, for example, allow the display device 301a to be fixed in a position where the display device 301a is rotated substantially 180 degrees. Typically, in such a state, images are displayed on the display devices 301a and 301b.

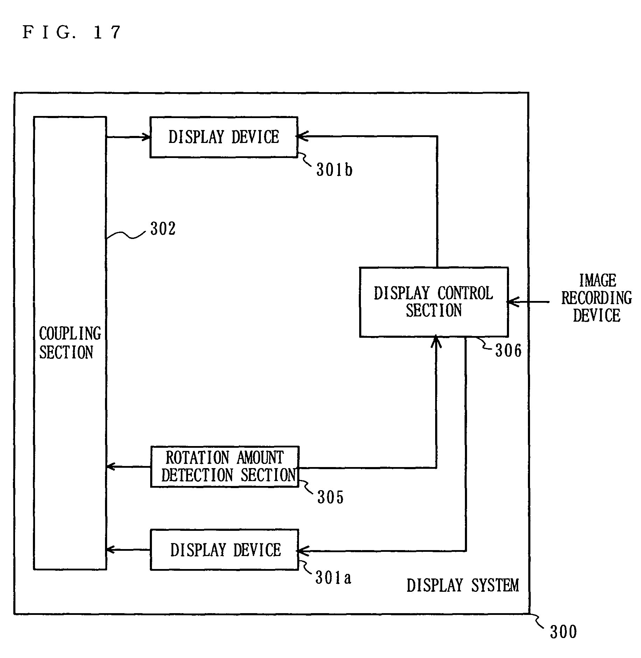

Here, FIG. 17 is a block diagram illustrating a functional structure of the display system 300. In FIG. 17, the display system 300 comprises a rotation amount detection section 305 and a display control section 306, in addition to display devices 301a and 301b and a coupling section 302 which are already described.

The rotation amount detection section 305 is implemented by a circuit similar to the angle detection section 112 shown in FIG. 7, and detects the rotation angle of the display device 301a.

The display control section 306 generates a map image, for example, using necessary data acquired from an external image recording device, and then outputs the image to the display devices 301a and 301b. The display control section 306 calculates an area, within an area R which is defined in the same manner as above, to be occupied by the screen of the display device 301a from the output value of the rotation amount detection section 306, and generates a map image of the calculated area. The display control section 306 further generates a map image to be displayed on the display device 301b and outputs the image to the display device 301b.

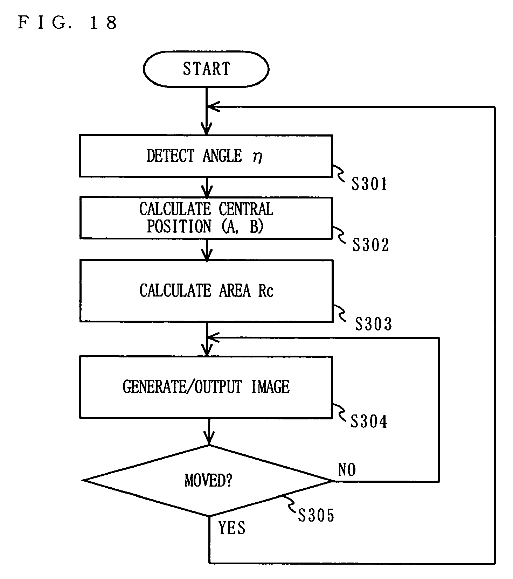

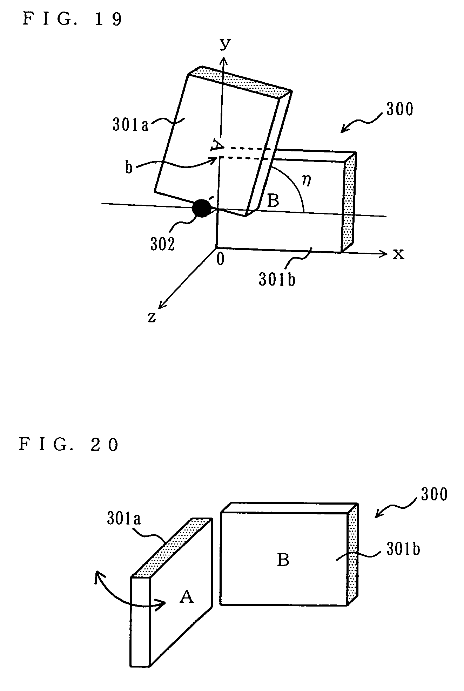

FIG. 18 is a flowchart illustrating the operations of the display control section 306. FIG. 19 is a schematic diagram illustrating the positional relationship between the display devices 301a and 301b. Referring to FIGS. 18 and 19, the operations of the display control section 306 will be described below.

First, the display control section 306 detects the rotation angle η formed by the lower side of the display device 301b and the lower side of the display device 301a, based on the output value of the rotation amount detection section 306 (step S301). The detection of the rotation angle η is performed by referring to a table which is prepared in advance and shows the relationship between the output value of the rotation amount detection section 306 and the rotation angle η.

Next, the display control section 306 calculates, using the following equation (5), the central position (A, B) of the display device 301a (step S302). Note that for convenience sake the origin point of the central position (A, B) is set at the lower left corner of the display device 301b. $( A , B ) = ( ( a / 2 ) cos η , b / 2 + ( a / 2 ) sin η )$

Next, the display control section 306 calculates, using the following equations (6), four coordinates P1-P4 identifying an area Rc currently occupied by the display screen of the display device 301a (step S303). $\begin{matrix}P 1 = ( - ( b / 2 ) sin η , b / 2 + ( b / 2 ) cos η ) \\ P 2 = ( acos η - ( b / 2 ) sin η , b / 2 + asin η + ( b / 2 ) cos η ) \\ P 3 = ( - ( b / 2 ) sin η , b / 2 - ( b / 2 ) cos η ) \\ P 4 = ( acos η - ( b / 2 ) sin η , b / 2 + asin η - ( b / 2 ) cos η )\end{matrix}$

Next, the display control section 306 generates an image for the display image 301a and an image for the display device 301b based on the area Rc just calculated, and outputs the images to the respective display devices (step S304). By this, the display devices 301a and 301b display the images of areas interconnected with each other, as with the first embodiment. Note that the types of images are as described in the first and second embodiments.

Next, the display control section 306 determines whether the display device 301a has moved based on the change in the output value of the rotation amount detection section 305 (step S305). If determined to be "YES", the display control section 306 returns to step S301 again. On the other hand, if determined to be "NO", the display control section 306 performs step S304 again.

As is clear from the above description, the display system 300 according to the third embodiment is also a user-friendly system, as with the aforementioned display system 100.

In the aforementioned embodiment, the coupling section 302 is mounted to the left side surface of each of the display devices 301a and 301b; however, the structure is not limited thereto, and the coupling section 302 may be mounted to either side surface.

As shown in FIG. 20, in order that the display device 301a can be fixed at an angle other than substantially 180 degrees relative to the display device 301b, a hole may be provided in the spherical body of the coupling member 303. In this case, it is preferable that a mechanism for allowing the display device 301a to contra-rotate about the coupling member 303 be further incorporated in the coupling member 303. By doing so, it becomes possible, for example, to direct the display device 301a to the front passenger seat side of the vehicle and direct the display device 301b to the driver seat side. In this case, however, since the top and bottom of the display device 301a are turned upside and down, the display control section 306 needs to perform image processing so that the person sitting in the front passenger seat can properly see the image.

### (Fourth Embodiment)

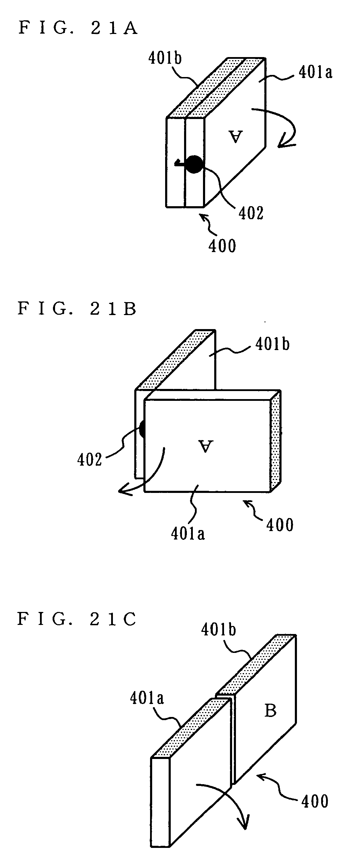

FIGS. 21A-21E are external views of a display system 400 according to a fourth embodiment of the present invention. FIGS. 21A-21E also illustrate the state transition of the display system 400.

The display device 400, which is installed in a vehicle, for example, comprises display devices 401a and 401b and a coupling section 402. Note that, to assist in understanding, in FIGS. 21A-21E a display screen of the display device 401a has the alphabet "A" attached thereto and a display screen of the display device 401b has the alphabet "B" attached thereto.

The display devices 401a and 401b are liquid crystal displays, for example. These display devices 401a and 401b display images such as those described in the first embodiment.

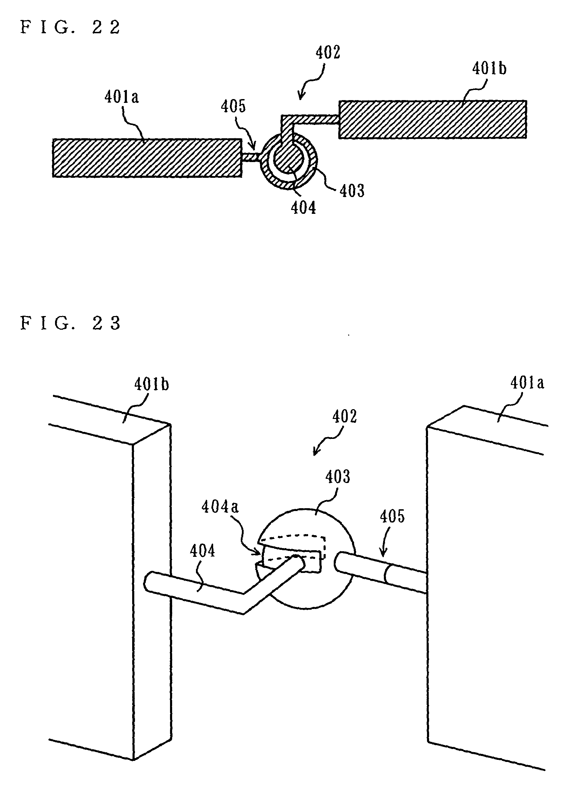

As shown in a side cross-sectional view of FIG. 22 and a perspective view of FIG. 23, the coupling section 402 includes coupling members 403 and 404 and a rotation mechanism 405 so as to couple side surfaces of the display devices 401a and 401b.

The coupling member 403 is mounted to one side surface of the display device 401a. A spherical body having a substantially spherical space provided inside thereof is mounted at an end of the coupling member 403. The spherical body of the coupling member 403 has a slit 403a formed therein so that the display device 401a can be displaced relative to the display device 401b.

The coupling member 404 is mounted to one side surface of the display device 401b. A spherical body which is accommodated in the space provided inside the coupling member 403 is mounted at an end of the coupling member 404. Here, it is preferable that a friction force of a magnitude capable of supporting the weight of the display device 401a act at a contact portion between the coupling members 404 and 403.

The rotation mechanism 405 is provided at some midpoint of the coupling member 403, and allows the display device 401a to rotate relative to the coupling member 403.

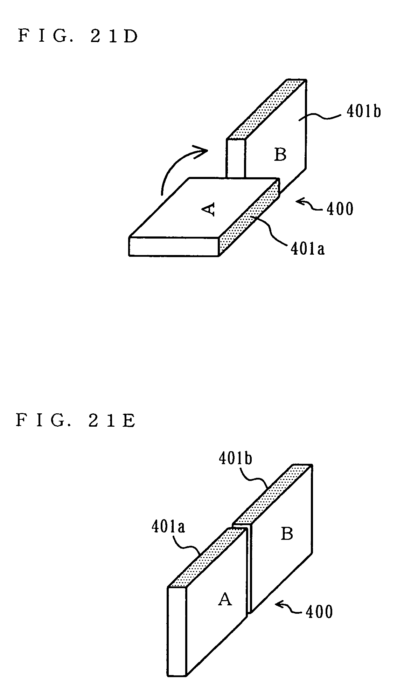

By such a coupling section 402, the user can accommodate the display device 401b behind the display device 401a, as shown in FIG. 21A. In the case where the user wants to use both display devices 401a and 401b, as shown in FIGS. 21B and 21C, the display device 401a is allowed to rotate by substantially 180 degrees substantially about the left side of the display device 401b within a horizontal plane. Thereafter, as shown in FIGS. 21D and 21E, the user contra-rotates the display device 401 a substantially about the coupling member 403. Typically, in such a state, images are displayed on the display devices 401a and 401b.

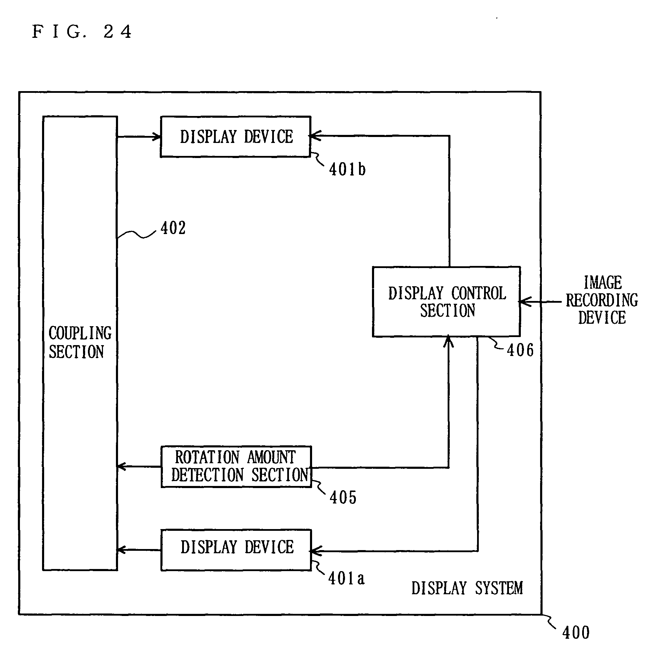

Here, FIG. 24 is a block diagram illustrating a functional structure of the display system 400. In FIG. 24, the display system 400 comprises a rotation amount detection section 405 and a display control section 406, in addition to display devices 401a and 401b and a coupling section 402 which are already described.

The rotation amount detection section 405 is implemented by a circuit similar to the angle detection section 112 shown in FIG. 7, and detects the biaxial rotation angles of the display device 401a.

The display control section 406 generates a map image, for example, using necessary data acquired from an external image recording device, and outputs the map image to the display devices 401a and 401b. The display control section 306 calculates an area, within an area R which is defined in the same manner as above, to be occupied by the screen of the display device 401a from the output value of the rotation amount detection section 406, and generates a map image of the calculated area. The display control section 406 further generates a map image to be displayed on the display device 401b and outputs the image to the display device 401b.

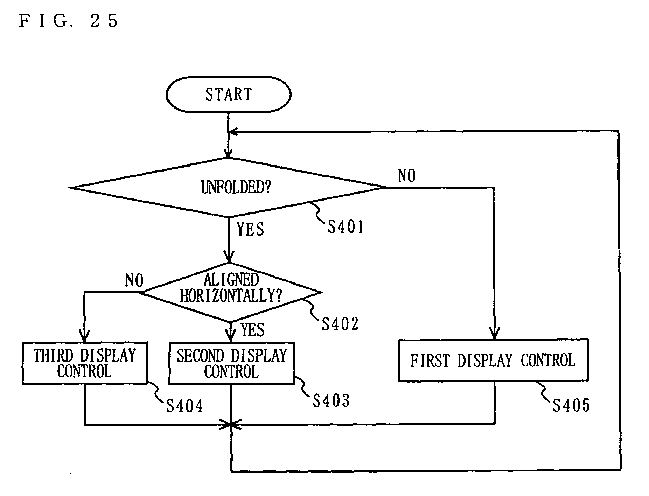

FIG. 25 is a flowchart illustrating the operations of the display control section 406. Referring to FIG. 25, the operations of the display control section 406 will be described below.

First, the display control section 406 determines whether the display device 401a is unfolded, based on the output value of the rotation amount detection section 406 (step S401). If determined to be "NO", the display control section 406 allows only the display device 401a to display an image (step S405) , and returns to the process of step S401.

On the other hand, if determined to be "NO" in step S401, the display control section 406 determines whether the display devices 401a and 401b are aligned horizontally, based on the output value of the rotation amount detection section 405 (step S402). If determined to be "YES", the display control section 406 generates images for the display devices 401a and 401b, and outputs the images to the respective display devices (step S403). Consequently, the display devices 401a and 401b display their respective images sent from the display control section 406. The images generated at this stage are typically map images representing a series of areas. After the above process, the display control section 406 returns to the process of step S401.

On the other hand, if determined to be "NO" in step S402, the display control section 406 generates different images for each of the display devices 401a and 401b, and outputs the different images to the respective display devices (step S404). Consequently, the display devices 401a and 401b display their respective images sent from the display control section 406. The image displayed on the display device 401a at this stage is typically an image for the front passenger seat, and the display image on the display device 401b is typically an image for the driver. After the above process, the display control section 406 returns to the process of step S401.

As is clear from the above description, the display system 400 according to the fourth embodiment is also a user-friendly system, as with the aforementioned display system 100.

In the aforementioned embodiment, the coupling section 402 is mounted to the left side surface of each of the display devices 401a and 401b; however, the structure is not limited thereto, and the coupling section 402 may be mounted to either side surface.

While the invention has been described in detail, the foregoing description is in all aspects illustrative and not restrictive. It is understood that numerous other modifications and variations can be devised without departing from the scope of the invention.

### INDUSTRIAL APPLICABILITY

A display system according to the present invention is effective in a vehicle-mounted application which requires usability, and the like.

## Claims

1. A display system comprising:
two display devices;
a coupling section for coupling the two display devices such that one display device can be displaced relative to the other display device;
a detection section for detecting a value by which a position of the one display device relative to the other display device can be identified; and
a display control section for generating an image to be displayed on at least the one display device, based on the position detected by the detection section, wherein
the one display device displays the image generated by the display control section.

2. The display system according to claim 1, wherein
the display control section generates a first image representing a map of a predetermined area and a second map image representing a map of an area surrounding the predetermined area,
the one display device displays the second map image generated by the display control section, and
the other display device displays the first map image generated by the display control section.

3. The display system according to claim 1, wherein
the display system is installed in a vehicle, and
the display control section generates an image at least for a passenger in the vehicle.

4. The display system according to claim 2, wherein the coupling section is provided to a backside of either the one or the other display device so as to couple the display devices such that either the other or the one display device can be fixed.

5. The display system according to claim 4, wherein the coupling section couples the display devices such that display sides of the one and the other display devices can be fixed facing in substantially a same direction.

6. The display system according to claim 5, wherein
the other display device has a groove of a predetermined shape formed in a backside thereof,
the coupling section includes:
a first supporting member engaged in the groove and sliding along the groove;
a coupling member rotatably connected to the first supporting member; and
a second supporting member rotatably connected to the coupling member and further supporting the one display device.

7. The display system according to claim 6, wherein
the one display device has an accommodating section formed at each of four corners thereof, and
the accommodating sections each have at least one plane selected based on a size of the first supporting member.

8. The display system according to claim 4, wherein
the coupling section includes:
a guide section comprised in the one display device and having a groove formed therein which extends in substantially a same direction as a direction of one side of the one display device; and
a slide section comprised in the other display device and sliding along the groove.

9. The display system according to claim 7, wherein
the coupling section further includes a rotation section comprised at a midpoint of the guide section, and
the rotation section allows a part of the guide section to rotate relative to end points of a rest part of the guide section.

10. The display system according to claim 4, wherein
the coupling section includes first and second supporting members comprised in the one and the other display devices, and
the first and second supportingmembers are coupled together, and allow either the one or the other display device to rotate in a first direction along a display side of either the other or the one display device.

11. The display system according to claim 10, wherein the first and second supporting members further allow either the one or the other display device to rotate in a second direction vertical to the first direction.

12. The display system according to claim 4, wherein
the coupling section includes first and second supporting members comprised in the one and the other display devices, and
the first and second supporting members are coupled together, and allow either the one or the other display device to rotate in a first direction vertical to a display side of either the other or the one display device.

## Amended claims

### Amended claims under Art. 19.1 PCT

**1.** (Amended) A display system comprising:
two display devices;
a coupling section for coupling the two display devices such that one display device can be displaced relative to the other display device;
a detection section for detecting a value by which a position of the one display device relative to the other display device can be identified; and
a display control section for generating an image to be displayed on at least the one display device, based on the position detected by the detection section, wherein
the one display device displays the image generated by the display control section, and
the one display device has an accommodating section formed at each of four corners thereof to accommodate a part of the coupling section.

**2.** The display system according to claim 1, wherein
the display control section generates a first image representing a map of a predetermined area and a second map image representing a map of an area surrounding the predetermined area,
the one display device displays the second map image generated by the display control section, and
the other display device displays the first map image generated by the display control section.

**3.** The display system according to claim 1, wherein
the display system is installed in a vehicle, and
the display control section generates an image at least for a passenger in the vehicle.

**4.** The display system according to claim 2, wherein the coupling section is provided to a backside of either the one or the other display device so as to couple the display devices such that either the other or the one display device can be fixed.

**5.** The display system according to claim 4, wherein the coupling section couples the display devices such that display sides of the one and the other display devices can be fixed facing in substantially a same direction.

**6.** The display system according to claim 5, wherein
the other display device has a groove of a predetermined shape formed in a backside thereof,
the coupling section includes:
a first supporting member engaged in the groove and sliding along the groove;
a coupling member rotatably connected to the first supporting member; and
a second supporting member rotatably connected to the coupling member and further supporting the one display device.

**7.** (Canceled)

**8.** The display system according to claim 4, wherein
the coupling section includes:
a guide section comprised in the one display device and having a groove formed therein which extends in substantially a same direction as a direction of one side of the one display device; and
a slide section comprised in the other display device and sliding along the groove.

**9.** The display system according to claim 7, wherein
the coupling section further includes a rotation section comprised at a midpoint of the guide section, and
the rotation section allows a part of the guide section to rotate relative to end points of a rest part of the guide section.

**10.** The display system according to claim 4, wherein
the coupling section includes first and second supporting members comprised in the one and the other display devices, and
the first and second supporting members are coupled together, and allow either the one or the other display device to rotate in a first direction along a display side of either the other or the one display device.

**11.** The display system according to claim 10, wherein the first and second supporting members further allow either the one or the other display device to rotate in a second direction vertical to the first direction.

**12.** The display system according to claim 4, wherein
the coupling section includes first and second supporting members comprised in the one and the other display devices, and
the first and second supporting members are coupled together, and allow either the one or the other display device to rotate in a first direction vertical to a display side of either the other or the one display device.

**13.** (New) A display system comprising:
two display devices;
a coupling section for coupling the two display devices such that one display device can be automatically displaced relative to the other display device;
a detection section for detecting a value by which a position of the one display device relative to the other display device can be identified; and
a display control section for generating an image to be displayed on at least the one display device, based on the position detected by the detection section, wherein
the one display device displays the image generated by the display control section.
